Europäisches Patentamt

European Patent Office

Office européen des brevets

(11) Publication number: **0 238 354**
**A2**

## (12) EUROPEAN PATENT APPLICATION

(21) Application number: **87302428.5**

(22) Date of filing: **20.03.87**

(51) Int. Cl.⁴: **B 65 H 1/00**

(30) Priority: **20.03.86 JP 39948/86**
**27.11.86 JP 181143/86**

(43) Date of publication of application:
**23.09.87 Bulletin 87/39**

(84) Designated Contracting States: **DE FR GB IT**

(71) Applicant: **HONDA GIKEN KOGYO KABUSHIKI KAISHA**
**1-go, 1-ban, Minami-Aoyama 2-chome**
**Minato-ku Tokyo 107 (JP)**

(72) Inventor: **Iijima, Satoshi**
**1-3-59-4, Ueondai**
**Kamifukuoka-shi Saitama (JP)**

**Sanada, Katsuiki**
**1-24-3, Betsusyo**
**Urawa-shi Saitama (JP)**

**Funayama, Yoshihiro**
**1-11-21, Mihara**
**Asaka-shi Saitama (JP)**

**Sakata, Masayasu**
**3-3-7, Higashi**
**Nizi-shi Saitama (JP)**

(74) Representative: **Leale, Robin George et al**
**FRANK B. DEHN & CO. Imperial House 15-19 Kingsway**
**London WC2B 6UZ (GB)**

(54) **Side stand for a motorcycle or the like.**

(57) A side stand of a vehicle not having inherent balance, such as a motorcycle, including a side stand leg (20) pivotally mounted to a mount (12). A swing arm (26) is pivotally mounted to the mount upwardly and forwardly on the vehicle from the pivot axis (P) of the side stand leg. The swing arm extends to a first end (30) to receive a tension spring (32) which extends to an attachment point (22) on the leg. The first end of the swing arm is displaced from the pivot axis (14) thereof a distance greater than the distance between the pivot axis of the swing arm and the pivot axis of the side stand leg. A ground contact rubber (36) is also illustrated which may contact the ground before the bottom of the side stand leg to force the leg into the bearing support position. The overall configuration is arranged such that there is a bearing support position for the leg most forwardly relative to the vehicle, a stored position most rearwardly relative to the vehicle, and an intermediate position extending in a substantially downward direction. A U shaped mount (42) for the mechanism may be employed which is inverted to receive the upper portion of the side stand leg.

FIG. 1

# Description

## "SIDE STAND FOR A MOTORCYCLE OR THE LIKE"

This invention relates to a side stand for a motorcycle or like vehicle of a kind which will not stand on its own, unattended.

Side stands for motorcycles have long been employed as a means for maintaining the vehicle substantially upright when left unattended. To this end, devices have been developed which, through springs or other mechanisms, provide a plurality of established positions. Pivoted side stand legs typically are biased to the fully retracted position where they extend substantially rearwardly on the vehicle up adjacent the frame. A load bearing position is also provided where the leg extends downwardly and forwardly on the vehicle.

Side stands have been devised which provide a position intermediate the support position and the fully retracted position. This intermediate position is also typically a stable position where the side stand leg will remain until either actuated by the riders foot or the weight of the vehicle. The intermediate position is commonly arranged such that as the vehicle is tipped towards the side stand, the weight of the vehicle causes the leg to move to the support position. As this is typically the movement of the leg further towards the front of the vehicle, the vehicle normally is moved backwards a small extent in achieving the supported position. From the intermediate position, the operator can use a foot to kick the leg rearwardly on the vehicle until the biasing mechanism draws the leg into the storage position.

Two such specific side stand devices are disclosed in Japanese Utility Model Publication # 1979/17244 and in Japanese Utility Model Publication # 1983/31741. In the former publication, the side stand is provided with an intermediate holding position where the stand does not support the weight of the vehicle. A more forward supporting position is also provided, as is a stored position. As noted above, such a device employs some movement of the vehicle relative to the ground once the side stand leg touches the ground, or manual biasing of the side stand leg forwardly to the support position prior to its touching the ground, in order to achieve full support of the vehicle. This can be inconvenient to the operator. With the latter device, three positions are again provided with a fairly complicated mechanical system employing a plurality of springs and a moveable fulcrum point.

Viewed from one aspect the invention provides a side stand of a motorcycle, comprising a side stand leg pivotally mounted about a first axis and having a spring attachment displaced from said first axis; a swing arm pivotally mounted about a second axis above and forwardly on the motorcycle from said first axis, said swing arm extending from said second axis to a first end, the distance from said second axis to said first end being greater than the distance from said second axis to said first axis; and a tension spring coupled with said first end and said spring attachment.

More specifically, in this first aspect of the invention a linkage swing arm is provided in such a configuration and location that a single spring mechanism employed with the swing arm allows the stand to provide the three required positions, i.e. the retracted storage position, the intermediate non-load bearing position and the supporting position.

Viewed from another aspect the invention provides a side stand of a motorcycle, comprising a side stand leg pivotally mounted to swing from a rearwardly projecting first position on the motorcycle to a forwardly and downwardly projecting second position on the motorcycle; spring means for resiliently retaining said side stand leg intermediate said first and second positions at a third position with said side stand leg extending forwardly and downwardly on the motorcycle; and a flexible leg fixed to said side stand leg and extending beyond the distal end of said side stand leg.

More specifically, a resilient element is arranged at the lower end of the support stand leg which extends beyond the distal end of the leg. When the leg is in the intermediate non-load bearing position, tipping of the vehicle to apply load to the stand results in the resilient device contacting the ground and moving the stand leg toward the load bearing position before the stand leg actually encounters the ground. Thus, movement of the motorcycle rearwardly to pivot the stand from the intermediate position to the support position is not necessary.

Some embodiments of the invention will now be described by way of example and with reference to the accompanying drawings, in which:-

Figure 1 is a side view of a first embodiment of the present invention.

Figure 2 is an end view partially in section taken along line II-II of Figure 1.

Figure 3 is a side view of the device of Figure 1 in a second orientation.

Figure 4 is a side view of the devices of Figure 1 in another orientation.

Figure 5 is a side view of the device of Figure 1 in another orientation.

Figure 6 is a side view of the device of Figure 1 in another orientation.

Figure 7 is a side view of the device of Figure 1 in the stored orientation.

Figure 8 is a side view of a second embodiment of the present invention with two additional orientations illustrated in phantom and dashed lines.

Figure 9 is a side view of the device of Figure 8 oriented in an intermediate position.

Figure 10 is a side view of the device of Figure 8 oriented in the support position.

Figure 11 is a end view of the device of Figure 8.

Figure 12 is an end view of a slightly modified version of the device of Figure 11.

Figure 13 is a side view of another embodiment of the present invention illustrating one position in full line and one position in phantom.

Figure 14 is an end view of the device of Figure 13.

Figure 15 is another embodiment of the present invention shown in side elevation.

Figure 16 is an end view of the device of Figure 15.

Figure 17 is a detailed cross-sectional end view of another embodiment of the device of Figure 15.

Figure 18 is a side view of a modified device of Figure 15.

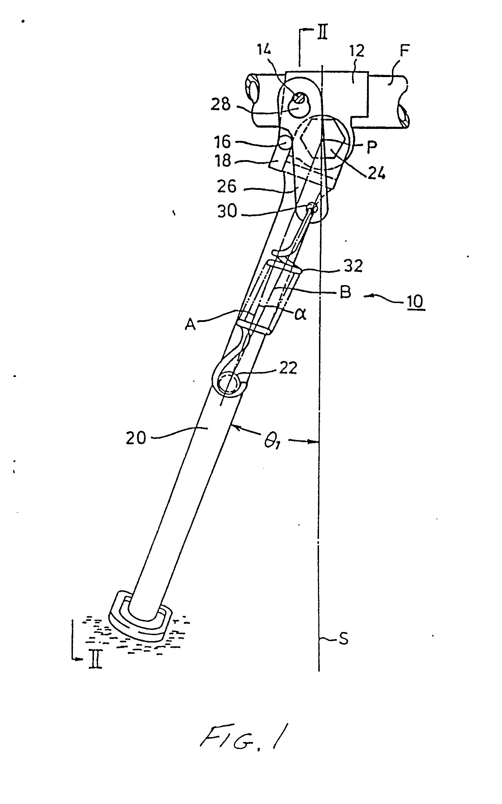

Turning in detail to the drawings, Figures 1 through 7 illustrate a first embodiment of the present invention. A side stand , generally designated 10, is shown attached to a lower body frame pipe F intermediate the front and rear wheels of a motorcycle. A mount 12 is shown to be welded to the lower body frame pipe F. A side stand leg 20 is pivotally mounted to the mount 12 and thus in turn pivotally mounted relative to the lower body frame pipe F. A mounting bolt 24 is shown to extend through the forked mounting plates of the side stand leg 20. The mount 12 extends between the forked plates and receives the mounting bolt 24 in pivotal arrangement. Thus, the side stand leg 20 may pivot about the axis of the mounting bolt 24 extending through point P.

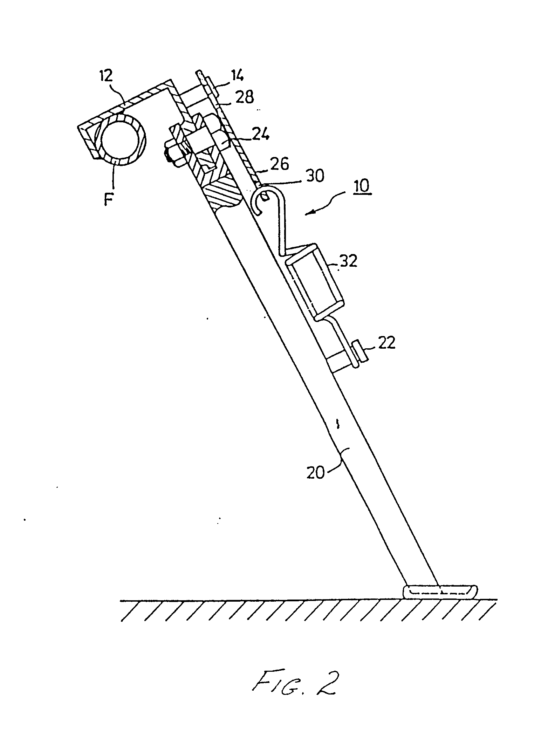

Associated with the mount 12 is a stop 18. The stop 18 is arranged to prevent the side stand leg 20 from pivoting beyond a certain point relative to the vehicle. The orientation of the leg 20 when abutting against the stop 18 is illustrated in Figure 1 where the leg 20 extends downwardly and forwardly to its distal end from the pivot. As can be seen in Figure 2, the leg 20 extends outwardly of the vehicle as well. An element 16 is associated with the stop 18, providing further constraint on the stand mechanism. Also located on the mount 12 is a fulcrum pin 14. The fulcrum pin 14 is located above and forwardly of the axis of the mounting bolt 24 on the vehicle to define a second axis.

Mounted to the fulcrum pin 14 is a swing arm 26. The swing arm 26 is able to pivot relative to the fulcrum pin 14 and has a hole 28 forming the bearing for the swing arm 26 against the fulcrum pin 14. The hole 28 is larger at its lower end to allow assembly of the swing arm 26 onto the fulcrum pin 14 without removal of the pin 14,which has a head at the distal end thereof. The swing arm 26 is formed of plate material and includes an elongate arm extending to a first end having an engaging hole 30. The swing arm 26 is able to pivot about the fulcrum pin 14 but is constrained on one side by the element 16 of the stop 18.

A tensioned coil spring 32 is coupled with the swing arm 26 at the engaging hole 30. An attachment point 22 is provided on the side stand leg 20 for receipt of the other end of the tensioned coil spring 32.

As described above, the fulcrum pin 14 is located above and forwardly on the vehicle from the mounting bolt 24. The mounting bolt 24, for reference purposes, includes a point P on the axis of the mounting bolt 24. A vertical line S is shown extending through point P for reference purposes.

As seen in Figure 1, the front of the motorcyle is to the left of the line S. The length of the swing arm 26 as measured between the axis of the fulcrum pin 14 mounting the swing arm 26 and the engaging hole 30 at the first end thereof is greater than the distance between the axis of the fulcrum pin 14 and the axis of the mounting bolt 24. Thus, the first end of the swing arm 26 extends to a location, under the influence of the spring 32, to between the axis of the mounting bolt 24 and the attachment point 22. The location of the element 16 affects the lateral position of the first end of the swing arm 26 relative to the location of the side stand leg 20 in certain orientations thereof.

Figures 1 and 3 through 7 illustrate the stand in a variety of positions. Figure 1 illustrates the position of the side stand leg 20 when in the load bearing position supporting the vehicle. In this position, the side stand leg 20 forms an angle $\Theta_1$ with regard to the reference line S. In this circumstance, the swing arm 26 is retained by the action of the fulcrum pin 14 and the element 16 on the stop 18 to the configuration illustrated. In this configuration, the first end of the swing arm 26 extends to the right of a line A extending between point 20 and the center of the attachment point 22. At this point, the first end of the swing arm 26 is located rearwardly of the vehicle from the line A. Under the foregoing circumstance, a small angle $\alpha$ is created between the reference line A and a second reference line B extending through the centers of the attachment point 22 and the engaging hole 30. With the spring 32 in tension, a component of the tension force is tending to rotate the leg 20 in a counterclockwise direction as viewed in Figure 1. This force is resisted when the vehicle is bearing on the side stand leg 20, forcing it fully over to the stop 18.

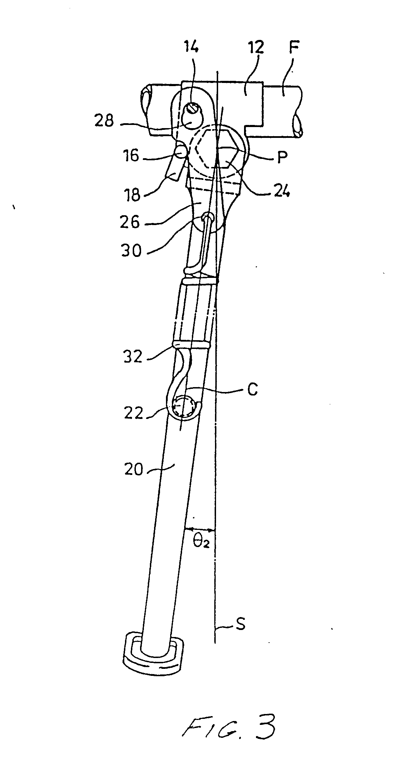

Figure 3 illustrates an intermediate position of the side stand leg 20. This intermediate position is established without the weight of the vehicle on the side stand leg 20 but with the leg extended. In this orientation, the reference lines A and B overlie one another to form a reference line C extending through the point P, the center of the engaging hole 30 and the center of the attachment point 22. The element 16 of the stop 18 continues to retain the swing arm 26 at a pre-determined angle, dictating the orientation of the line C. In this orientation, the leg 20 forms an angle $\Theta_2$ with the reference line S. With the spring 32 aligned with the pivot axis of the mounting bolt 24, no torque is experienced about that pivot axis. Consequently, a stable or neutral position is obtained in this orientation.

In the intermediate orientation of Figure 3, the side stand leg 20 extends downwardly and to the left. Thus, as the weight of the vehicle comes to be borne by the side stand leg 20, the reaction force of the ground and the weight of the vehicle creates a clockwise moment to advance the side stand leg 20 (or to back up the vehicle) into the orientation of Figure 1 with the leg extending more forwardly on the vehicle than in the non-bearing condition. At the same time, the forward inclination of the depending side stand leg 20 in the non-bearing position is small in order than forward movement of the vehicle would pivot the stand rearwardly if the distal end thereof contacted the ground.

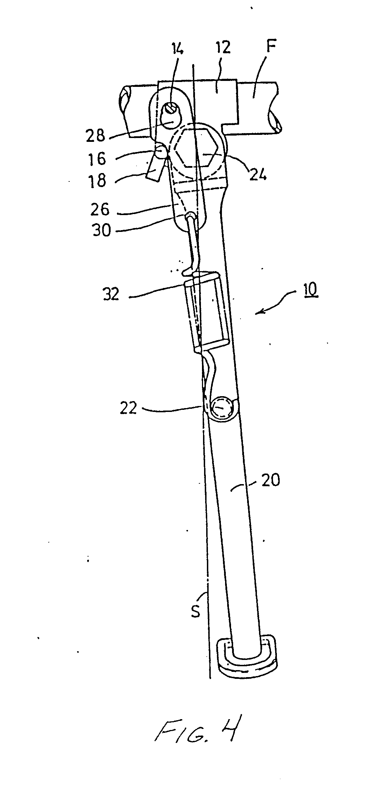

If the vehicle is lifted from support by the side stand leg 20, the leg will progress from the position illustrated in Figure 1 to the position illustrated in Figure 3. Inertia may carry the leg beyond that neutral position. However, as that occurs, it would assume the posture illustrated in Figure 4. Under this circumstance, the line A extends to the right of the line B. Thus, there is a restoring torque in the clockwise direction, as seen in Figure 4, making the orientation of Figure 3 the neutral position.

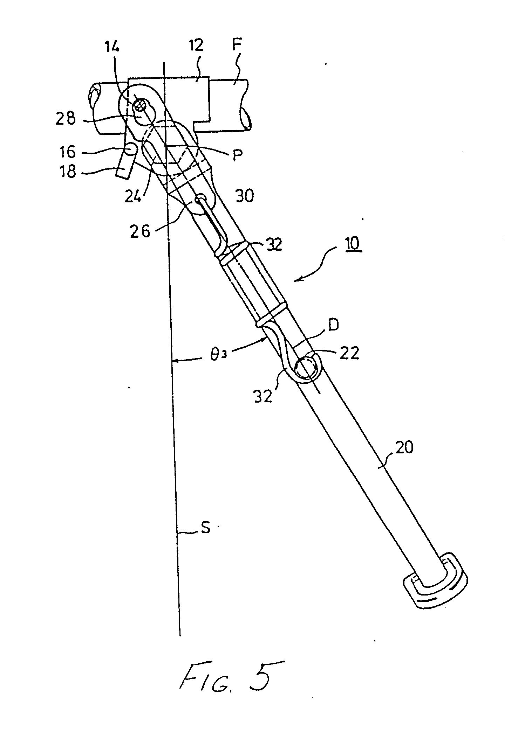

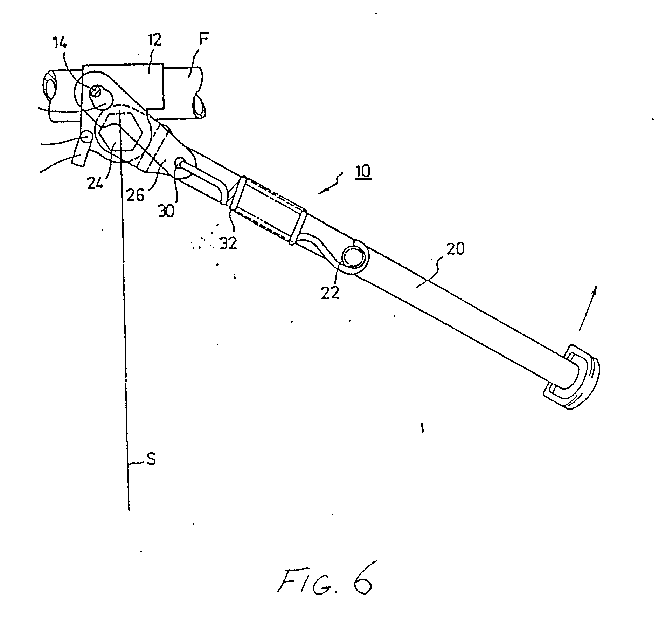

The orientation of the side stand leg 20 as illustrated in Figure 5 is an unstable position with the spring 32 tensioned to the maximum. As reference lines A and B coincide to form reference line D, there is no moment generated by the tension in the spring 32. However, any variation in the angle $\Theta_3$ would generate a moment and result in movement of the side stand leg 20 in one direction or the other. In the circumstance when the side stand leg 20 has been extended, use of the riders foot to move the side stand leg 20 into the stored position requires overcoming clockwise moment imposed by the spring 32 on the side stand leg 20 between the angles $\Theta_2$ and $\Theta_3$. Once $\Theta_3$ is exceeded, the side stand leg 20 will pivot upwardly to the stored position. Operation to lower the stand from the stored position to the extended position would operate in reverse of the foregoing progression. Thus, depending on which way the side stand leg 20 rotates, it will either rotate through a position as shown in Figure 4 or through a position as shown in Figure 6 as it progresses toward either of the two stable positions to either side of the unstable position illustrated in Figure 5.

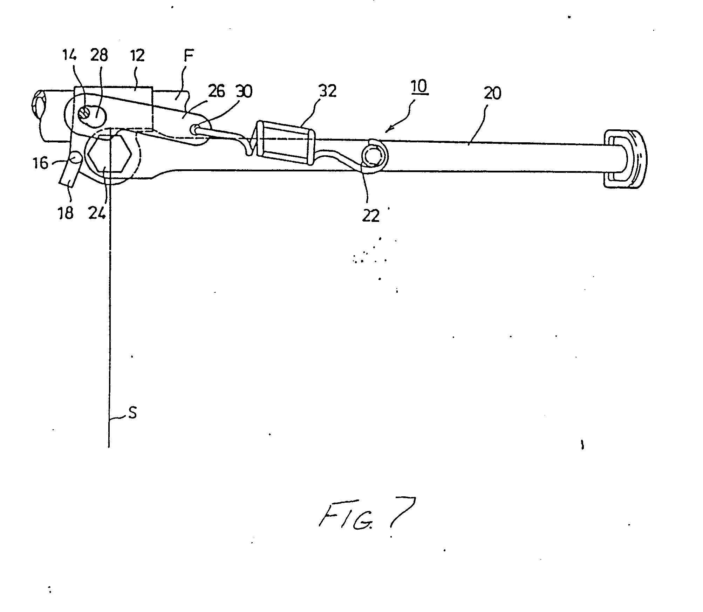

The orientation of the side stand leg 20 as illustrated in Figure 7 is the stored position. In this orientation, the side stand leg 20 extends rearwardly from the mounting bolt 24 on the vehicle. The fulcrum pin 14 being above the mounting bolt 24, the spring 32 provides a counter clockwise moment which retains the leg in place. Through orientation of the fulcrum pin 14 upwardly and forwardly of the mounting bolt 24, the variation in tension on the spring is slight and the moment arm is relatively short. Consequently, only a moderate moment is generated. The stand is easy to manipulate and does not impact very hard in encountering stops. Naturally, moving the leg toward the position as illustrated in Figure 1 from the position illustrated in Figure 7 passes through the foregoing conditions and operations in reverse.

Thus, the orientation of the simple linking of the swing arm 26 and the spring 32 in cooperation with the leg 20 and the stop 18 provides for a multi-position side stand mechanism convenient to operate and use. Further, a minimum number of parts are employed for ease of construction. The parts are also considered durable with the main load on the side stand leg 20 being through a secure pivot.

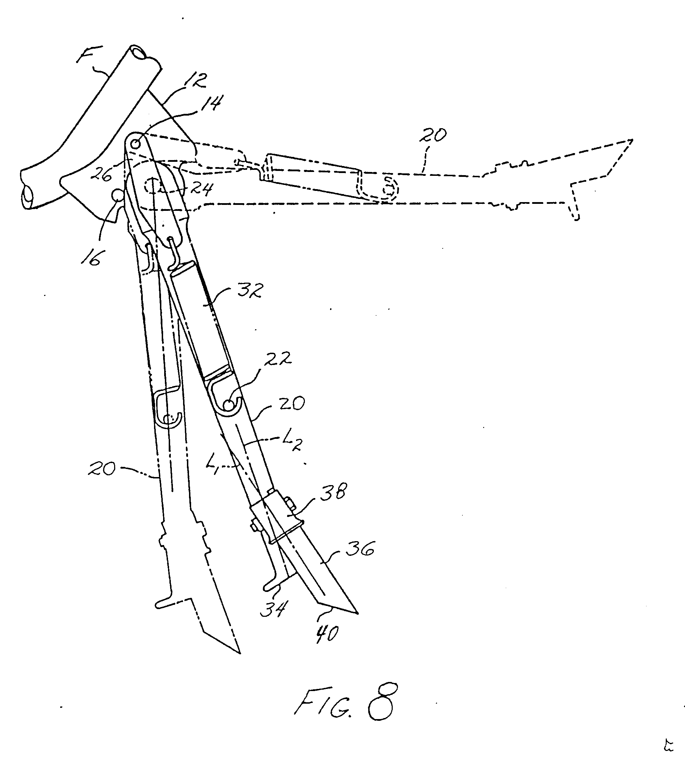

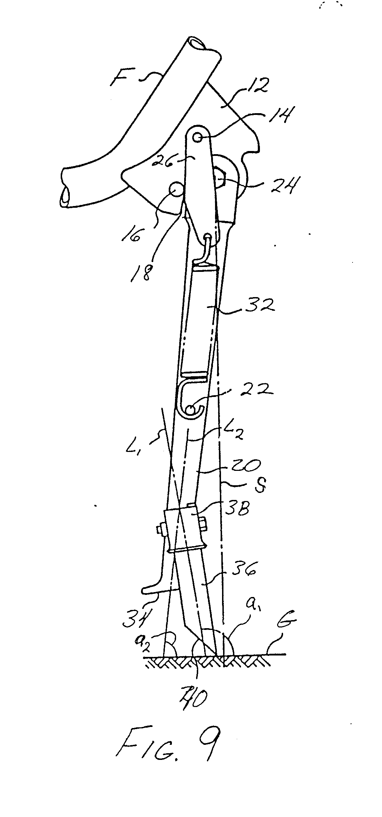

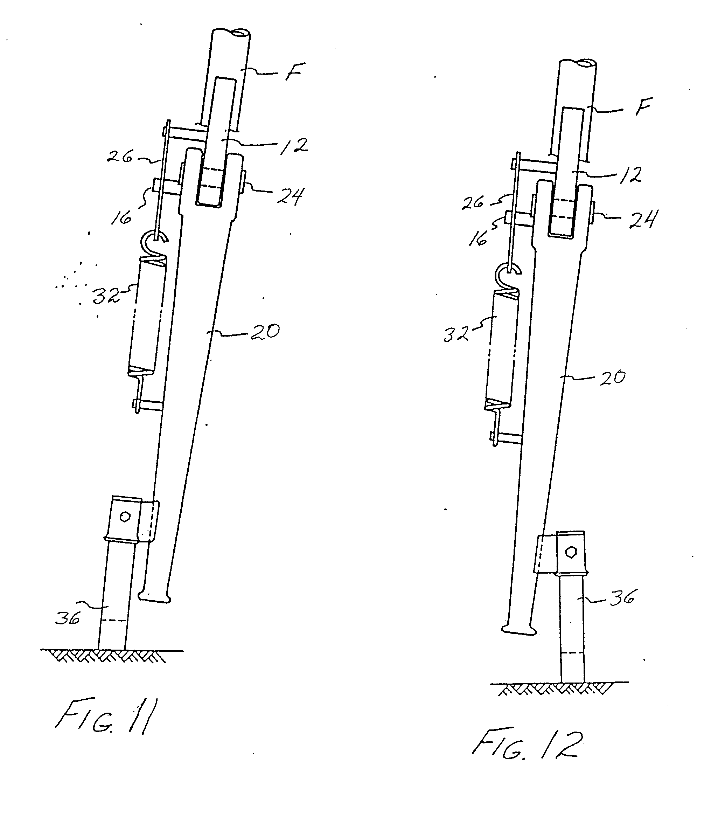

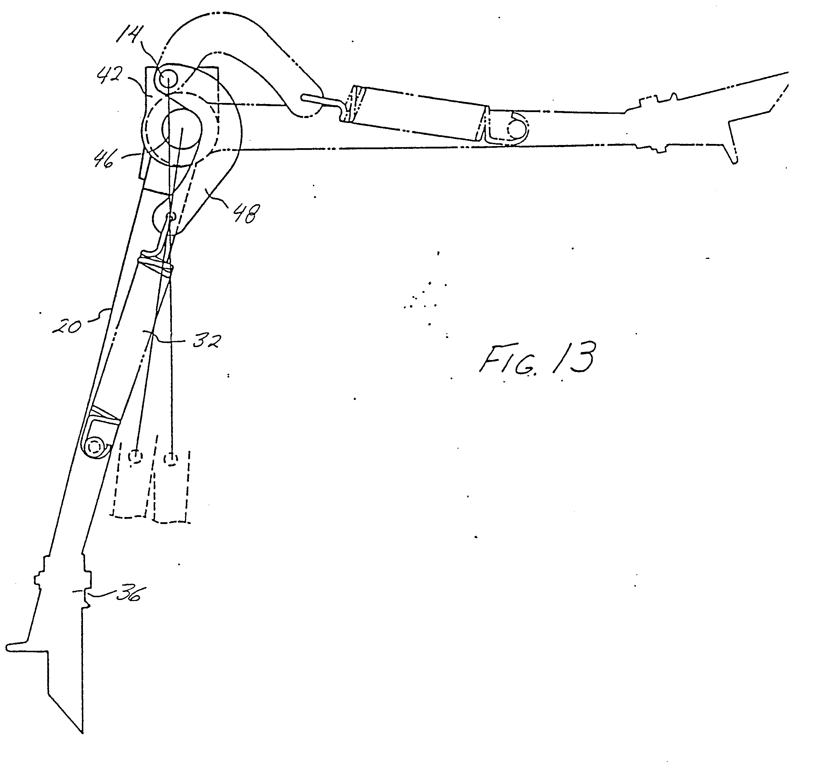

Turning then to the embodiment of Figures 8 through 12, identical reference numbers refer to identical or similar elements to those found in the first embodiment. Reference is made to the foregoing discussion in that regard. Associated with the leg 20 in this embodiment is a resilient element extending beyond the bottom 34 of the side stand leg 20. The resilient element comprises a ground contact rubber 36 connected by means of a bracket 38 to the lower end of the leg 20. The ground contact rubber 36 is aligned along an axis $L_1$ which is inclined relative to the longitudinal axis $L_2$ of the side stand leg 20. The distal end of the ground contact rubber 36 is located rearwardly of the end or contact face 34 of the side stand leg 20 when the leg is extended downwardly. Further, an inclined face 40 faces forward at the distal end of the ground contact rubber 36. With the leg 20 in the non-load bearing orientation extending downwardly, the axis line $L_1$ extends forwardly with respect to the vertical reference line S. The distal tip of the ground contact rubber 36 is also found to be forwardly on the motorcycle relative to the vertical reference line S. The reference line S extends vertically from the center of the mounting bolt 24. Thus, as the motorcycle is tipped towards the stand, any ground contact of the stand will result in a moment in the clockwise direction to force the leg 20 into the load supporting position against the stop 18. The line $L_1$ makes an obtuse angle $a_1$ relative to the ground G as seen in Figure 9 while the line $L_2$ makes an acute angle $a_2$ relative to the ground . The positioning of the ground contact rubber 36 either inwardly or outwardly from the leg 20 is equally useful, as can be seen from Figures 11 and 12 respectively.

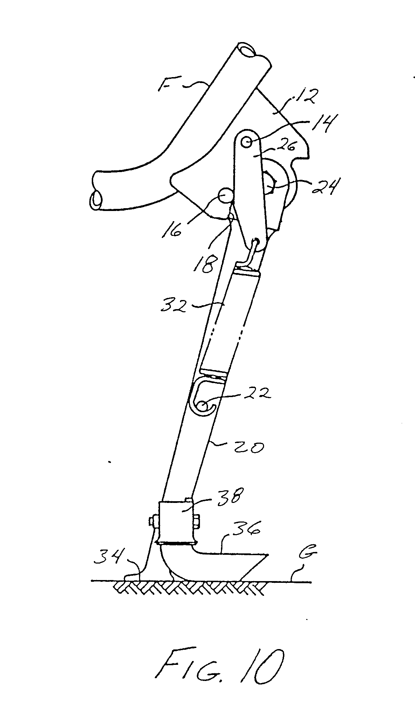

When the body of the motorcycle is held upright and the end of the ground contact rubber 36 is not pressed against the ground G, the ground contact rubber 36 extends downwardly as illustrated in Figure 9. When the body of the vehicle is tilted toward the side stand, the ground contact rubber 36 is pressed against the ground G, such that the ground contact rubber 36 bends to face the rear as shown in Figure 10. Because of the inclined face 40, the angle of the axis $L_1$ relative to the ground ($a_1$) may be smaller and still insure that the ground contact rubber 36 will be bent to the rear when loaded.

The ground contact rubber 36, when contacting the ground G, will create a friction force which will tend to retain the distal end of the ground contact rubber 36 at the location where it contacts the ground G. As the vehicle is moved further toward the stand, the friction force retains the distal end of the ground contact rubber 36 in place and the bending of the rubber 36 will cause the leg 20 to pivot about the mounting bolt 24 in a clockwise direction, as seen in Figures 9 and 10, toward the front of the vehicle. Thus, it is the leg 20 which moves forwardly relative to the ground rather than the vehicle moving rearwardly relative to the ground in order to achieve the appropriate angle on the stand for supporting the vehicle. By having the point of contact of the ground contact rubber 36 with the ground G forwardly of the vertical line S extending through the mounting bolt 24, even on surfaces where sufficient friction does not exist, the moment created tends to move the leg 20 forwardly to the bearing position.

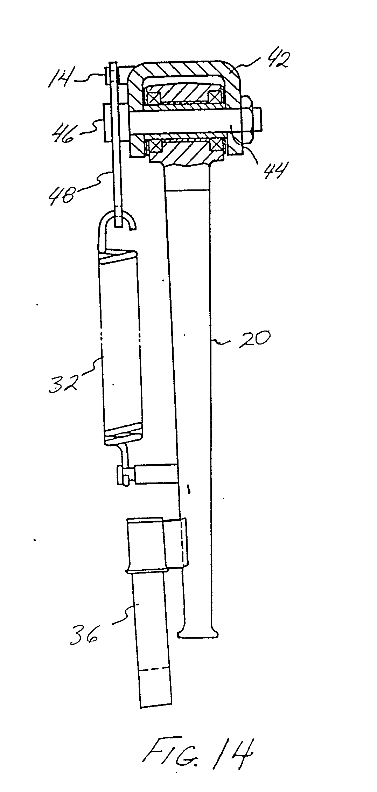

Looking at Figures 13 and 14, a similar device with a slightly different linkage mechanism and mounting system is illustrated. In this embodiment, an inverted U shaped mount 42 is employed with a leg 20 positioned within the mount 42. A pin 44 extends between the sides of the inverted U shaped mount 42 to pivotally mount the leg 20. The pin 44 includes a large head 46 which operates as a stop for the swing arm 48. The swing arm 48 is configured to extend around the head 46 for appropriate maximum rotation of the swing arm 48 so as to operate as in the prior embodiments.

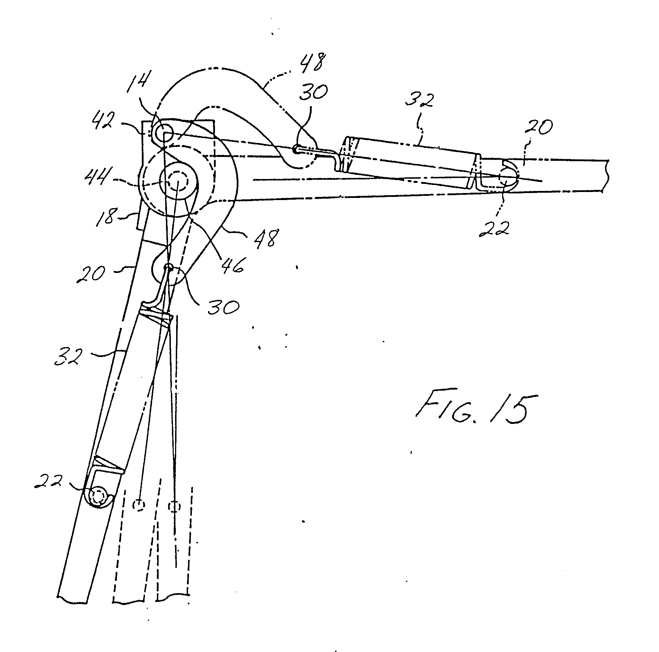

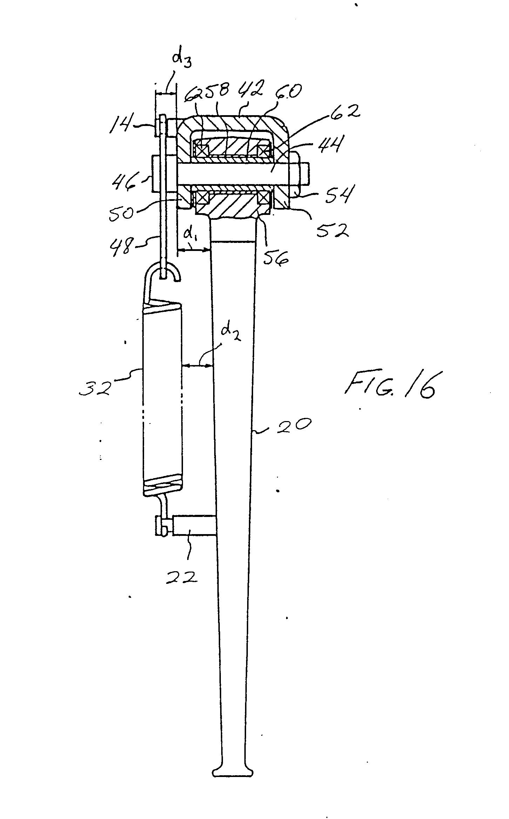

The embodiment of Figures 15 and 16 discloses a mechanism substantially like that of Figures 13 and 14. Greater attention is directed to the mounting arrangement where the bracket 42 is again shaped in an inverted U, including legs 50 and 52. The pin 44 is shown to be retained by a nut 54. The leg 20 extends up to a mounting portion 56 accommodating a bearing 58 and a spacer 60. Dust seals 62 protect the bearing. The distances $d_1$, $d_2$ and $d_3$ as illustrated in Figure 16 accommodate the components without overly extending the components laterally outwardly on the vehicle and without causing contact and rubbing where inappropriate.

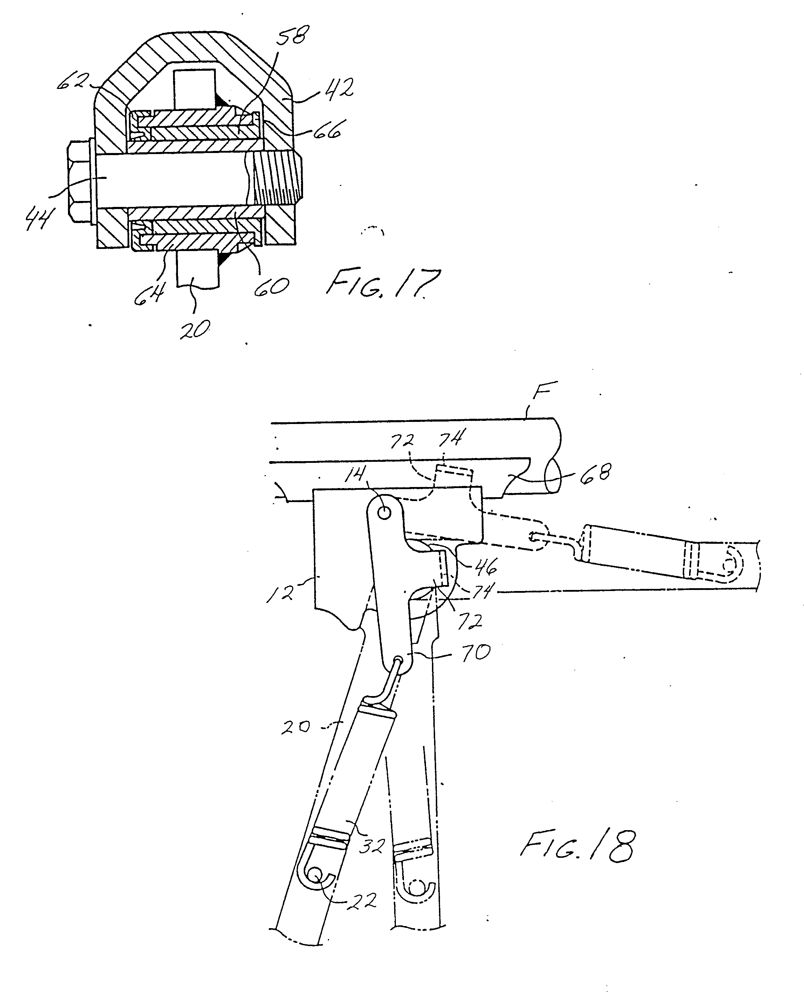

In the modified embodiment of Figure 17, the leg 20 is shown to be welded to a cylindrical member 64 to define the upper pivotal portion thereof. The bearing 58 includes a flange 66 at one end thereof along with a dust seal 62 at the other. This helps retain material from the bearing without requiring two dust seals 62. The inverted U configuration also aids in allowing contaminants to fall from the area of the bearing.

In Figure 18, the bracket 12 is shown to be welded to a doubling plate 68 in turn welded to the frame F. The swing arm 70 is formed with a linear shape and extends to an engaging lug 72 having a projection 74 for engaging the head 46 of the pivot shaft. In this way, limitation on the movement of the swing plate is again achieved.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filling or prosecution of any divisional application based thereon.

**Claims**

1. A side stand of a motorcycle, comprising a side stand leg pivotally mounted about a first axis and having a spring attachment displaced from said first axis; a swing can pivotally mounted about a second axis above and forwardly on the motorcycle from said first axis, said swing arm extending from said axis to a first end, the distance from said second axis to said first end being greater than the distance from said second axis to said first axis; and a tension spring coupled with said first end and said spring attachment.

2. A side stand as claimed in claim 1, wherein both said side stand leg and said swing arm are pivotally mounted to a mount affixed to the motorcycle.

3. A side stand as claimed in claim 1 or 2, further comprising a stop extending into the path of pivotal movement of said side stand leg.

4. A side stand as claimed in claims 2 and 3, wherein said stop is provided on said mount.

5. A side stand as claimed in claim 3 or 4, wherein said stop includes a first element positioned to extend into the path of pivotal movement of said swing arm such that when said side stand leg engages said stop, said swing arm engages said first element with said first end rearwardly on the motorcyle of a line between said first axis and said spring attachment.

6. A side stand as claimed in any of claims 3 to 5, wherein said stop includes a first element positioned to extend into the path of pivotal movement of said swing arm such that said swing arm engages said first element with said first end and said spring being positioned along the line between said first axis and said spring attachment with said side stand leg extending downwardly and forwardly on the motorcycle.

7. A side stand as claimed in any preceding claim, wherein said first axis, said second axis and said spring attachment are arranged such that said first axis, said second axis, said spring attachment and said first end lie in a common line with said side stand leg extending downwardly and rearwardly on the motorcycle.

8. A side stand of a motorcycle, comprising a side stand leg pivotally mounted to swing from a rearwardly projecting first position on the motorcycle to a forwardly and downwardly projecting second position on the motorcycle; spring means for resiliently retaining said side stand leg intermediate said first and second positions at a third position with said side stand leg extending forwardly and downwardly on the motorcycle; and a flexible leg fixed to said side stand leg and extending beyond the distal end of said side stand leg.

9. A side stand as claimed in claim 8, wherein said side stand leg is pivotally mounted to a mount affixed to the motorcycle.

10. A side stand as claimed in claim 8 or 9, wherein said flexible leg extends downwardly and rearwardly on the motorcycle.

11. A side stand as claimed in claim 10, wherein the distal end of said flexible leg is below and forwardly on the motorcycle of the pivotal mounting of said side stand leg.

0238354

FIG. 1

023835

FIG. 2

*FIG. 3*

023835ᐧ

FIG. 4

0238354

FIG. 5

0238354

FIG. 6

FIG. 7

0238354

FIG. 8

FIG. 9

0238354

FIG. 10

0238354

FIG. 11

FIG. 12

FIG. 13

FIG. 14

0238354

0238354

FIG. 15

0238354

FIG. 16

0238354

FIG. 17

FIG. 18